# EUROPÄISCHE PATENTSCHRIFT

(11) **EP 0 837 955 B1**
(45) Veröffentlichungstag und Bekanntmachung des Hinweises auf die Patenterteilung: **24.03.1999**
(21) Anmeldenummer: 96920626.7
(22) Anmeldetag: 04.07.1996
(51) Int. Cl.: C23C 30/00, F16C 33/24, F16C 33/12

(54) **GLEITSCHICHT AUF KUPFERBASIS**
COPPER-BASED SLIDING SURFACE
COUCHE DE GLISSEMENT A BASE DE CUIVRE

(30) Priorität: 12.07.1995 AT 1183/95
(43) Veröffentlichungstag der Anmeldung: 29.04.1998
(73) Patentinhaber: MIBA Gleitlager Aktiengesellschaft, A-4663 Laakirchen (AT)
(72) Erfinder: RUMPF, Thomas, A-4810 Gmunden (AT); GÄRTNER, Walter, A-4810 Gmunden (AT)
(74) Vertreter: Hübscher, Heiner, Dipl.-Ing.
(86) Internationale Anmeldenummer: AT9600118
(87) Internationale Veröffentlichungsnummer: WO9703228

(56) Entgegenhaltungen:
- EP-A- 0 143 449
- EP-A- 0 256 226
- EP-A- 0 300 993
- EP-A- 0 307 189
- WO-A-87/07308
- DE-A- 4 142 454

## Beschreibung

Die Erfindung bezieht sich auf eine Gleitschicht auf Kupferbasis, bestehend aus einer Kupfer- oder Kupferlegierungsmatrix mit weicheren metallischen Einlagerungen von wenigstens 10 Gew.%, die Partikel mit bezüglich einer schichtparallelen Beobachtungsfläche voneinander getrennten Schnittflächen bilden.

Gegossene oder gesinterte Gleitschichten aus blei haltigen Bronzen, die üblicherweise einen Zinngehalt zwischen 1 und 5 Gew.% und einen Bleigehalt von 10 bis 30 Gew.% aufweisen, zeigen eine für das jeweilige Herstellungsverfahren kennzeichnende, vom Zinn- und Bleigehalt abhängige heterogene Struktur mit einer breiten statistischen Streuung der auf die einzelnen Bleipartikel bezogenen mittleren Partikeldurchmesser. Beim Gießen sammelt sich das Blei in den interdendritischen Räumen der erstarrenden Bronze an, wobei die Bleipartikelgröße bei geringerer Erstarrungsgeschwindigkeit zunimmt, was zu einer entsprechend breiten Gaußschen Verteilung der Größe der Bleiausscheidungen führt. Bei gesinterten Bleibronzen stellt sich eine ähnliche statistische Verteilung der Bleipartikelgrößen ein, allerdings aus einer anderen Ursache. Aufgrund der beim Sintern nicht gleichmäßig ablaufenden Koagulations- und Wachstumsvorgänge ergeben sich aus der ursprünglich im Sinterpulver sehr feinen Bleiverteilung unterschiedliche Bleipartikelgrößen, die in einem weiten Streubereich liegen.

Mit steigendem Bleigehalt entstehen sowohl bei gieß- als auch bei sintertechnisch hergestellten Bronzegleitschichten gröbere, zum Teil zusammenhängende Bleiphasen, die bei an sich guten tribologischen Eigenschaften der Gleitschicht geringere Festigkeitswerte nach sich ziehen. Für höhere Festigkeitsanforderungen mußte daher der Bleigehalt auf z. B. 15 Gew.% beschränkt und die mit dieser Beschränkung verbundenen ungünstigeren tribologischen Eigenschaften der Gleitschicht in Kauf genommen werden. Versuche, eine Gleitschicht mit einer besonders feinen Bleiverteilung, beispielsweise mit mittleren Partikeldurchmessern kleiner als 1 µm, durch ein galvanisches oder physikalisches Auftragen herzustellen, haben zwar erwartungsgemäß zu höheren Festigkeitswerten geführt, doch haben sich trotz des höheren Bleigehaltes bis zu 35 Gew.% die tribologischen Eigenschaften der Gleitschicht in überraschender Weise kaum verbessert.

Der Erfindung liegt somit die Aufgabe zugrunde, eine Gleitschicht auf Kupferbasis der eingangs geschilderten Art so zu verbessern, daß den höheren Gehalten an weicheren Einlagerungen entsprechende gute tribologische Eigenschaften mit vorteilhaften Festigkeitswerten verbunden werden können.

Die Erfindung löst die gestellte Aufgabe dadurch, daß bei einer mit der kleinsten Schnittfläche beginnenden, nach aufsteigender Flächengröße erfolgenden Summierung der Partikelschnittflächen die Schnittfläche jenes Partikels, das die Zwischensumme der Schnittflächen bis zu seiner Flächengröße auf 50 % der Endsumme ergänzt, höchstens dem Zehnfachen der Schnittfläche des die Zwischensumme auf 5 % der Endsumme ergänzenden Partikels, zumindest aber einem Fünftel der größten Einzelschnittfläche entspricht.

Der Erfindung liegt die Erkenntnis zugrunde, daß es für die tribologischen Eigenschaften einer Gleitschicht auf Kupferbasis mit z. B. bei weicheren Bleieinlagerungen nicht nur auf den Mengenanteil der Bleieinlagerungen, sondern auch auf deren Größenverteilung ankommt, und zwar insbesondere in der Gleitfläche bzw. einer schichtparallelen Beobachtungsfläche. Liegen die Schnittflächen zwischen den Bleipartikeln und der Beobachtungsfläche in einem begrenzten Größenbereich, so können in überraschender Weise unerwartet gute tribologische Eigenschaften für die Gleitschicht erzielt werden. Obwohl die Ursachen hiefür noch nicht vollständig geklärt sind, wird angenommen, daß durch die im Vergleich zu der herkömmlichen breiten statistischen Größenverteilung der Blei phasen wesentlich gleichmäßigere Struktur der Einlagerungen weder die Festigkeit der Gleitschicht durch größere zusammenhängende Blei phasen örtlich beeinträchtigt noch ein ins Gewicht fallender Anteil an Bleieinlagerungen erhalten wird, die aufgrund der geringen Partikelgröße kaum einen Beitrag für die tribologischen Eigenschaften geben können. Da es somit auf die Größe der Schnittflächen der Bleipartikel und deren Größenverteilung ankommt, werden die Partikelschnittflächen nach aufsteigender Flächengröße summiert, um den für die angestrebte Wirkung erheblichen Bereich der Schnittflächengrößen festlegen zu können. Die sich in der Beobachtungsfläche ergebenden kleinsten Schnittflächen der Partikel dürfen in Summe an der Gesamtfläche aller Schnittflächen höchstens 5 % ausmachen, wenn die größte dieser für die tribologische Wirkung vernachlässigbaren kleinsten Schnittflächen zumindest einem Zehntel der Schnittfläche jenes Partikels entspricht, das die Zwischensumme der Schnittflächen bis zu seiner Flächengröße auf 50 % der Endsumme ergänzt. Die Schnittfläche dieses die Zwischensumme auf 50 % der Endsumme ergänzenden Partikels darf wiederum nicht kleiner als ein Fünftel der größten Einzelschnittfläche aller Partikel sein, damit die angestrebte Größenverteilung in bezug auf die Gesamtfläche eingehalten wird.

Wie bereits ausgeführt wurde, dürfen keine zusammenhängenden Einlagerungen mit einer die geforderte Festigkeit beeinträchtigenden größeren Schnittfläche auftreten. Dies wird im allgemeinen dann sichergestellt sein, wenn die Schnittfläche jenes Partikels das die Zwischensumme der Schnittflächen bis zu seiner Flächengröße auf 50 % der Endsumme ergänzt, höchstens 10 µm² beträgt. Nach unten ergibt sich in der Praxis ebenfalls eine Grenze, die für die Schnittfläche des die Zwischensumme der Schnittflächen auf 50 % der Endsumme ergänzenden Partikels mit mindestens 0,1 µm² festgelegt werden kann. Besonders vorteilhafte Ergebnisse ergeben sich in diesem Zusammenhang, wenn die Schnittfläche dieses auf 50 % der Endsumme bezogenen Partikels zwischen 0,5 und 4 µm² liegt.

Besonders günstige Strukturverhältnisse werden in weiterer Ausbildung der Erfindung dadurch erzielt, daß die Schnittfläche jenes Partikels, das die Zwischensumme der Schnitfflächen bis zu seiner Flächengröße auf 50 % der Endsumme ergänzt, höchstens dem Siebenfachen, vorzugsweise höchstens dem Sechsfachen, der Schnittfläche des die Zwischensumme auf 5 % der Endsumme ergänzenden Partikels entspricht. Außerdem kann das maximal zulässige Verhältnis zwischen der Flächengröße des die Zwischensumme der Schnittflächen bis zu seiner Flächengröße auf 50% der Endsumme ergänzenden Partikels zur größten Einzelschnittfläche auf 1 : 4 verringert werden. Durch diese Größenverhältnisse wird nämlich ein engerer Verteilungsbereich der Schnittflächengrößen mit einer vorteilhaften Auswirkung auf die tribologischen Eigenschaften der Gleitschicht bedingt, ohne die Festigkeit zu beeinträchtigen. Es braucht wohl nicht besonders hervorgehoben zu werden, daß die zu Bleieinlagerungen gemachten Ausführungen auch für andere weichere Einlagerungen, beispielsweise Wismut, in der Kupfer- bzw. Kupferlegierungsmatrix gelten.

Um eine erfindungsgemäße Gleitschicht zu erhalten, wurde eine stählerne Tragschale in einem elektrolytischen Bad, das sich aus Kupfer-, Blei- und Nickel salzen, einem die elektrische Leiffähigkeit erhöhenden Zusatz eines Leitsalzes sowie einem geeigneten Additivsystem aus Tensiden und Glanzbildnern in einem für eine Gleitschicht aus 60 % Kupfer, 30 % Blei und 10 % Nickel geeigneten Mengenverhältnis zusammensetzte, beschichtet, und zwar bei einer durchschnittlichen Stromstärke von 4 A/dm². Die gebildete Gleitschicht wies eine Härte von 370 UMHV 5p auf und war als Gleitwerkstoff noch ungeeignet. Erst durch eine Wärmebehandlung bei einer Temperatur, die über einen Drittel der absoluten Schmelztemperatur des Matrixwerkstoffes, jedoch unter der Schmelztemperatur der Weichphase liegt, über einen Zeitraum von 1 bis 10 Stunden konnte die erfindungsgemäße Struktur erreicht werden, die hervorragende Gleiteigenschaften sowie eine gute Korrosionsbeständigkeit gegenüber den in Schmierölen und Verbrennungsgasen enthaltenen korrosiven Bestandteilen bietet. Die Ultramikrohärte betrug nach dieser Behandlung 150 UMHV 5p.

Eine andere Möglichkeit, eine erfindungsgemäße Gleitschicht herzustellen, besteht darin, auf einem gegossenen Trägerwerkstoff aus einer Bleibronze eine Gleitschicht aus 60 % Kupfer, 30 % Blei und 10 % Nickel physikalisch in Vakuum durch eine Kathodenzerstäubung aufzubringen. Durch das Zerstäuben der entsprechend zusammengesetzten Kathode wird auf dem Trägerwerkstoff der Kupferwerkstoff kristallisiert und gleichzeitig das weiche Blei in feiner Verteilung in dem Grundwerkstoff eingelagert. Die Kathodenzerstäubung kann beispielsweise bei einer Temperatur von ca. 80 °C und einer Argonatmosphäre in einem Vakuum von 2.10⁻³ mbar durchgeführt werden, wobei die Temperatur des gegossenen Trägerwerkstoffes konstant gehalten wird und unter der Schmelztemperatur des Bleiwerkstoffes liegt.

Die erfindungsgemäße Gleitschicht kann aber auch durch ein Gießen hergestellt werden. Die Schmelze beispielsweise aus Kupfer mit 25 % Blei und 3 % Zinn kann in diesem Fall in einer geeigneten Gießvorrichtung so auf einem Trägerwerkstoff aufgegossen werden, daß die Erstarrung der Matrix und in der Folge der Bleiausscheidungen sehr rasch erfolgt, damit es zu einer gleichmäßigen und feinen Gefügeausbildung kommt. Um das gewünschte Gießergebnis zu erreichen, kann die Temperatur der Schmelze, die Vorwärmtemperatur des Trägerwerkstoffes, die Gießgeschwindigkeit und die Gußdicke entsprechend eingestellt werden.

In der Zeichnung ist der Erfindungsgegenstand schematisch dargestellt. Es zeigen
- Fig. 1: eine erfindungsgemäße Gleitschicht schematisch in einem schichtparallelen Schnitt in einem vergrößerten Maßstab,
- Fig. 2: eine der Fig. 1 entsprechende Darstellung einer Konstruktionsvariante und
- Fig. 3: die Verteilung der Schnittflächengrößen der Bleipartikel in einer schichtparallelen Beobachtungsfläche in einem Schaubild, das über der auf der Abszisse in einem logarithmischen Maßstab aufgetragenen Schnittflächengröße einerseits den Flächenanteil der jeweiligen Schnittflächengröße an der Gesamffläche der Schnitfflächen aller Blei partikel und anderseits die Summe der nach aufsteigender Flächengröße summierten Schnittflächen zeigt.

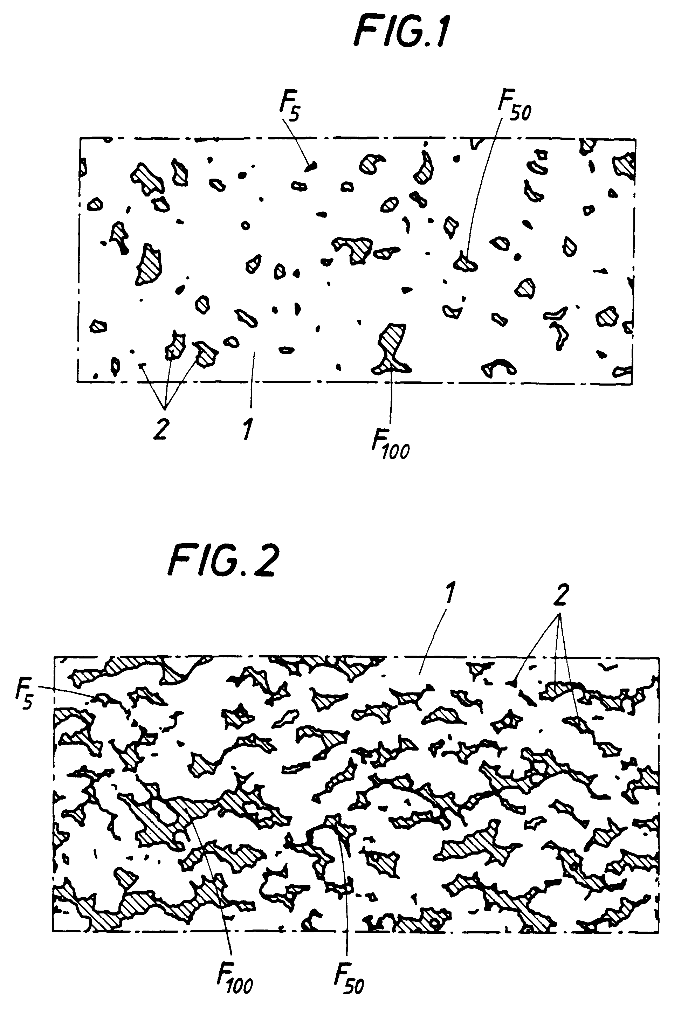

Die Fig. 1 zeigt eine Schliffprobe einer erfindungsgemäßen, galvanisch abgeschiedenen Gleitschicht in einer schematischen Darstellung. Die im Grundwerkstoff 1 eingelagerten weicheren Blei partikel 2 bilden in der dargestellten, schichtparallelen Schlifffläche Schnittflächen, die ausgemessen und der Größe nach in aufsteigender Reihenfolge zusammengezählt werden können. Die Schnittfläche, die die Zwischensumme der Schnittflächen auf 5 % der Endsumme ergänzt, ist mit F₅ bezeichnet und hat im gewählten Ausführungsbeispiel, das einen Bleigehalt von 20 % zeigt, eine Größe von 0,11 µm². Dementsprechend ist jenes Bleipartikel, dessen Schnittfläche die Zwischensumme der Schnittflächen auf 50 % ergänzt mit F₅₀ und die größte Einzelschnittfläche mit F₁₀₀ angegeben. Die Schnittfläche F₅₀ beträgt 0,63 µm², die Schnittfläche F₁₀₀ 2,19 µm².

Das Ausführungsbeispiel nach der Fig. 2 zeigt die typischen Verhältnisse bei einer physikalisch im Vakuum durch eine Kathodenzerstäubung aufgebrachten Gleitschicht. Im Grundwerkstoff 1 sind wieder Bleipartikel 2 eingelagert, die einen Gewichtsanteil von 28 % ausmachen. Die Schnittflächen F₅, F₅₀ und F₁₀₀ sind wieder eingetragen, wobei sich für diese Flächen ein Betrag von 0,10 µm², 0,51 µm² und 1,73 µm² ergibt.

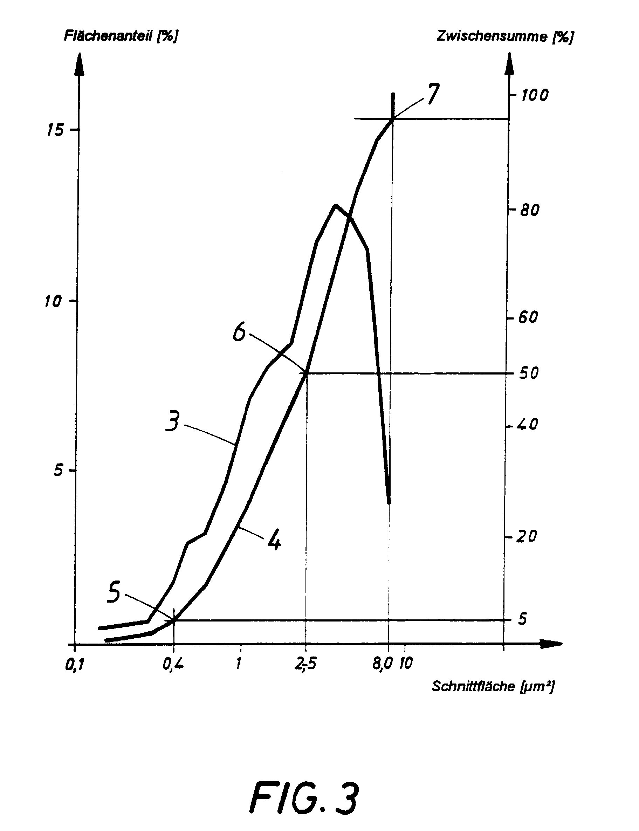

In der Fig. 3 sind die in der Schlifffläche sichtbaren Schnittflächen der Bleieinlagerungen 2 einer für die Erfindung kennzeichnenden Gleitschicht der Größe nach geordnet auf der Abszisse und ihr Anteil an der Gesamtfläche aller ausgemessenen Schnittflächen auf der Ordinate aufgetragen, so daß die daraus sich ergebende Kurve 3 die Größenverteilung der Schnittflächen der Bleipartikel 2 in der Schlifffläche veranschaulicht. Um die sich aus den einzelnen Schnittflächen einer Probe ergebende Abstufung der Kurve 3 zu vermeiden, wurde die Kurve 3 anhand von gleitenden Mittelwerten erstellt. Die Kurve 4 zeigt den Verlauf der Zwischensumme der einzelnen Schnittflächen bei einer mit der kleinsten Schnittfläche beginnenden, nach aufsteigender Flächengröße erfolgenden Summierung der Bleipartikelschnittflächen. Diesen Kurven wurde eine Probe zugrundegelegt, die gegenüber den Ausführungsbeispielen nach den Fig. 1 und 2 gröbere Einlagerungen aufwies. Aus diesen Kurven 3 und 4 läßt sich ablesen, daß bei einer Zwischensumme von 5 % entsprechend dem Schnittpunkt 5 eine Schnittfläche F₅ von angenähert 0,4 µm² und bei einer Zwischensumme von 50 % entsprechend dem Schnittpunkt 6 eine Schnittfläche F₅₀ von etwa 2,5 µm² erreicht werden. Die größte Einzelschnittfläche F₁₀₀, die gemäß Punkt 7 die Zwischensumme auf die Endsumme ergänzt, beträgt 8 µm². Es ergibt sich somit eine Verteilung, bei der die Schnittfläche F₅ des Bleipartikels im Bereich der Zwischensumme von 5 % zu der Schnittfläche F₅₀ im Bereich der Zwischensumme von 50 % ein Verhältnis von ca 1:6 aufweist. Die größte Einzelschnittfläche F₁₀₀ entspricht etwa der 3,2fachen Schnittfläche F₅₀ des Partikels im Zwischensummenbereich von 50 %.

## Patentansprüche

1. Gleitschicht auf Kupferbasis, bestehend aus einer Kupfer- oder Kupferlegierungsmatrix mit weicheren metallischen Einlagerungen von wenigstens 10 Gew.%, die Partikel mit bezüglich einer schichtparallelen Beobachtungsfläche voneinander getrennten Schnittflächen bilden, dadurch gekennzeichnet, daß bei einer mit der kleinsten Schnittfläche beginnenden, nach aufsteigender Flächengröße erfolgenden Summierung der Partikelschnittflächen die Schnittfläche jenes Partikels, das die Zwischensumme der Schnittflächen bis zu seiner Flächengröße auf 50 % der Endsumme ergänzt, höchstens dem Zehnfachen der Schnittfläche des die Zwischensumme auf 5 % der Endsumme ergänzenden Partikels, zumindest aber einem Fünftel der größten Einzelschnittfläche entspricht.

2. Gleitschicht nach Anspruch 1, dadurch gekennzeichnet, daß die Schnittfläche jenes Partikels, das die Zwischensumme der Schnittflächen bis zu seiner Flächengröße auf 50 % der Endsumme ergänzt, höchstens 10 µm² beträgt.

3. Gleitschicht nach Anspruch 1 oder 2, dadurch gekennzeichnet, daß die Schnittfläche jenes Partikels, das die Zwischensumme der Schnittflächen bis zu seiner Flächengröße auf 50 % der Endsumme ergänzt, mindestens 0,1 µm², vorzugsweise zwischen 0,5 und 4 µm², beträgt.

4. Gleitschicht nach einem der Ansprüche 1 bis 3, dadurch gekennzeichnet, daß die Schnittfläche jenes Partikels, das die Zwischensumme der Schnittflächen bis zu seiner Flächengröße auf 50 % der Endsumme ergänzt, höchstens dem Siebenfachen, vorzugsweise höchstens dem Sechsfachen, der Schnittfläche des die Zwischensumme auf 5 % der Endsumme ergänzenden Partikels entspricht.

5. Gleitschicht nach einem der Ansprüche 1 bis 4, dadurch gekennzeichnet, daß die Schnittfläche jenes Partikels, das die Zwischensumme der Schnittflächen bis zu seiner Flächengröße auf 50 % der Endsumme ergänzt, zumindest einem Viertel der größten Einzelschnittfläche entspricht.

## Claims

1. A copper-based antifriction layer consisting of a copper or copper alloy matrix having softer metallic inclusions of at least 10% by weight, which form particles having sectional planes which are separated from one another with respect to a layer-parallel viewing surface, characterised in that when the particle sectional areas are totalled starting with the smallest sectional area and proceeding with increasing area size, the sectional area of that particle which complements to 50% of the end total the subtotal of the sectional areas up to its area size is equivalent at most to ten times the sectional area of the particle complementing the subtotal to 5% of the end total, but is equivalent to at least one-fifth of the largest individual sectional area.

2. An antifriction layer according to claim 1, characterised in that the sectional area of that particle which complements to 50% of the end total the subtotal of the sectional areas up to its area size is 10 µm² maximum.

3. An antifriction layer according to claim 1 or 2, characterised in that the sectional area of that particle which complements to 50% of the end total the subtotal of the sectional areas up to its area size is at least 0.1 µm², preferably between 0.5 and 4 µm².

4. An antifriction layer according to any one of claims 1 to 3, characterised in that the sectional area of that particle which complements to 50% of the end total the subtotal of the sectional areas up to its area size is equivalent at most to seven times, preferably at most to six times, the sectional area of the particle complementing the subtotal to 5% of the end total.

5. An antifriction layer according to any one of claims 1 to 4, characterised in that the sectional area of that particle which complements to 50% of the end total the subtotal of the sectional areas up to its area size is equivalent to at least one-quarter of the largest individual sectional area.

## Revendications

1. Couche de glissement à base de cuivre, constituée d'une matrice de cuivre ou d'alliage de cuivre, ayant des inclusions métalliques plus molles, d'au moins 10 % en poids, constituant des particules avec des sections séparées les unes des autres par rapport à une surface d'observation parallèle à la couche, caractérisée par le fait qu'en formant l'addition, en commençant par la plus petite section, en progressant par augmentation de la taille de la surface, des sections de particules, l'intervalle de chaque particule qui complète la somme intermédiaire des sections jusqu'à sa taille de surface à 50 % de la somme finale, correspond au plus au décuple de la section de la particule complétant les espaces intermédiaires à concurrence de 5 % de la somme finale, en correspondant cependant à au moins un cinquième de la section individuelle la plus grande.

2. Couche de glissement selon la revendication 1, caractérisée par le fait que la section de la particule complétant la somme intermédiaire des sections jusqu'à sa taille de surface, à 50 % de la somme finale, est au maximum de 10 µm².

3. Couche de glissement selon la revendication 1 ou 2, caractérisée par le fait que la section de la particule, complétant la somme intermédiaire des sections jusqu'à sa taille de surface à 50 % de la somme finale, est d'au moins 0,1 µm², de préférence entre 0,5 et 4 µm².

4. Couche de glissement selon l'une des revendications 1 à 3, caractérisée par le fait que la section de la particule, complétant la somme intermédiaire des sections jusqu'à sa taille de surface à 50 % de la somme finale, correspond au moins au septuple, de préférence de plus au sextuple de la section de la particule complétant la somme intermédiaire à 5% de la somme finale.

5. Couche de glissement selon l'une des revendications 1 à 4, caractérisée par le fait que la section de la particule, complétant la somme intermédiaire des sections jusqu'à sa taille de surface à 50 % de la somme finale, correspond au moins à un quart de la section individuelle la plus grande.
